# FASCICULE DE BREVET EUROPEEN

(11) **EP 0 750 647 B1**
(45) Date de publication et mention de la délivrance du brevet: **09.12.1998**
(21) Numéro de dépôt: 95911311.9
(22) Date de dépôt: 07.03.1995
(51) Int. Cl.: C08F 297/06, C08L 53/00

(54) **POLYMERES DU PROPYLENE ET PROCEDE POUR LEUR OBTENTION**
PROPYLENPOLYMERE UND VERFAHREN ZU DEREN HERSTELLUNG
PROPYLENE COMPOUNDS AND PROCESS FOR PREPARING THE SAME

(30) Priorité: 17.03.1994 FR 9403250
(43) Date de publication de la demande: 02.01.1997
(73) Titulaire: SOLVAY POLYOLEFINS EUROPE - BELGIUM (Société Anonyme), 1050 Bruxelles (BE)
(72) Inventeur: BETTONVILLE, Serge, B-4102 Ougree (BE); DE ROP, Philippe, B-1300 Wavre (BE); FRANQUINET, Claude, B-1140 Bruxelles (BE)
(74) Mandataire: Troch, Geneviève
(86) Numéro de dépôt international: EP9500851
(87) Numéro de publication internationale: WO9525137

(56) Documents cités:
- EP-A- 0 401 993
- EP-A- 0 482 855
- EP-A- 0 536 503
- CHEMICAL ABSTRACTS, vol. 71, no. 13, 29 Décembre 1969, Columbus, Ohio, US; abstract no. 125417p, YOSHIOKA SHIRO ET AL. 'HIGH IMPACT-RESISTANT BLOCK COPOLYMER' page 47 ;colonne 1 ; & JP,A,44 020 751 (MITSUI TOATSU CHEM.) 5 Septembre 1969
- DATABASE WPI Week 9217, Derwent Publications Ltd., London, GB; AN 84-254528 'BLOCK COPOLYMER WITH UNSATD. BOND- COMPRISING PROPYLENE]- ETHYLENE]- NON:CONJUGATED DIENE]' & JP,A,59 155 416 (MITSUBISHI PETROCH.) 4 Septembre 1984

## Description

La présente invention concerne des copolymères à blocs du propylène contenant un α,ω-diène non conjugué. Elle concerne plus particulièrement des copolymères à blocs du propylène contenant un α,ω-diène non conjugué dans au moins un des blocs ainsi qu'un procédé d'obtention de ces copolymères.

Il est connu d'augmenter la résistance aux chocs du polypropylène en le mélangeant à des élastomères éthylène - propylène. Néanmoins, de tels mélanges n'étant pas parfaitement homogènes, ils ne présentent pas toutes les propriétés souhaitées.

On a tenté de remédier à ce problème en copolymérisant le propylène avec une autre alpha-oléfine telle que par exemple l'éthylène.

Parmi les copolymères du propylène, ceux qui présentent le meilleur compromis résistance aux chocs / rigidité sont les copolymères dits à blocs préparés dans des procédés en deux étapes comprenant une première étape d'homopolymérisation du propylène ou de copolymérisation du propylène avec au maximum 6 % molaire d'une autre alpha-oléfine telle que l'éthylène suivie d'une deuxième étape de polymérisation d'éthylène ou de copolymérisation d'éthylène avec du propylène et éventuellement une autre alpha-oléfine dans des proportions telles que la quantité d'éthylène soit supérieure à 10 % molaire (voir par exemple EP-0202946).

Les propriétés rhéologiques de ces copolymères à blocs et en particulier leur tenue en fondu restent cependant insuffisantes pour des applications particulières telles que le thermoformage ou l'obtention de mousses.

En outre lorsque les copolymères à blocs sont obtenus par polymérisation dans un diluant tel qu'un hydrocarbure ou un des monomères maintenu à l'état liquide, on observe, lors de la deuxième étape de polymérisation, la formation d'une importante quantité de polymère soluble dans le diluant ce qui entraîne une augmentation de la viscosité du milieu de polymérisation, une détérioration des échanges thermiques ainsi que l'agglomération des particules de polymère entre elles ou sur les parois du réacteur. Dans ces conditions, il est nécessaire de limiter la quantité de polymère produite lors de cette étape ce qui conduit à une limitation de la résistance aux chocs des copolymères finals. La perte de polymère par solubilisation est également responsable d'une augmentation sensible des coûts de production.

Par ailleurs, le document JP 59/155416 divulgue des copolymères à blocs du propylène dont chacun des blocs contient de 1 à 30 % en poids de 4- ou 5-méthyl-1,4-hexadiène. Ces copolymères présentent une bonne résistance aux chocs et sont chimiquement réactifs.

Le document EP-482855 décrit l'obtention de copolymères à blocs du propylène, en présence d'un solide catalytique contenant du titane sur lequel on a prépolymérisé un α,ω-diène. Le copolymère à blocs est produit par polymérisation de propylène ou d'un mélange de propylène et d'éthylène dans une première étape pour former un polymère cristallin, suivie de la copolymérisation du propylène et de l'éthylène dans une deuxième étape pour former un polymère caoutchouteux. Les copolymères à blocs produits, qui présentent un bon compromis résistance aux chocs/rigidité, ne contiennent pas de copolymère d'éthylène, de propylène et de α,ω-diène.

Le document CA 71 (1969) 125417p décrit la fabrication de copolymères à blocs du propylène présentant également un bon compromis résistance aux chocs/rigidité impliquant au moins trois étapes de polymérisation, à savoir, l'homopolymérisation du propylène, la copolymérisation de propylène, d'éthylène et de 1,7-octadiène et l'homopolymérisation de l'éthylène. Les copolymères à blocs ainsi produits contiennent, notamment, un bloc d'homopolymère de l'éthylène.

Le document EP-536503 décrit une composition de polymères d'α-oléfines présentant une bonne tenue en fondu comprenant un polymère (I) contenant un copolymère d'une α-oléfine, telle que le propylène ou l'éthylène, et d'un polyène pouvant être un α,ω-diène (i) et un polymère d'oléfine, telle que le propylène et l'éthylène, (ii), ainsi qu'un polymère d'oléfine (II). Le polymère (I) est obtenu par un procédé impliquant une première étape de prépolymérisation dans laquelle on copolymérise du propylène ou de l'éthylène avec un polyène, suivie d'une deuxième étape dans laquelle on polymérise du propylène ou de l'éthylène.

La présente invention concerne des copolymères à blocs du propylène différents de ceux décrits dans l'art antérieur et qui présentent de nombreux avantages par rapport à ces derniers.

A cet effet la présente invention concerne un copolymère à blocs du propylène contenant pour :
- 100 parties en poids d'un polymère (a) du propylène choisi parmi les homopolymères et les copolymères du propylène ne contenant pas plus de 6 % en poids d'éthylène et/ou d'une alpha-oléfine ayant de 4 à 6 atomes de carbone,
- de 1 à 100 parties en poids d'un polymère (b) d'éthylène choisi parmi les copolymères d'éthylène contenant au moins 30 % et pas plus de 90 % en poids de propylène, ledit copolymère (b) contenant en outre de environ 0,001 à environ 20 % en poids d'unités monomériques dérivées d'α,ω-diène par rapport au poids total du copolymère à blocs.

Les copolymères à blocs du propylène selon la présente invention contiennent le plus souvent au moins 5 parties en poids et de préférence au moins 10 parties en poids de polymère (b) pour 100 parties en poids de polymère (a). Les copolymères selon l'invention qui contiennent au moins 20 parties en poids de polymère (b) pour 100 parties en poids de polymère (a) donnent de bons résultats. La quantité de polymère (b) n'est en outre généralement pas supérieure à 90 parties en poids. On obtient de bons résultats lorsque la quantité de polymère (b) est inférieure ou égale à 80 parties en poids pour 100 parties de polymère (a).

Le polymère (a) est généralement un homopolymère du propylène ou un copolymère de propylène et d'éthylène ne contenant pas plus de 3 % en poids d'éthylène. On obtient de bons résultats lorsque le polymère (a) est un homopolymère du propylène.

Le polymère (b) contient de préférence au moins 40 % en poids de propylène. La concentration en propylène dans le polymère (b) est en outre généralement inférieure ou égale à 70 % en poids, plus particulièrement inférieure ou égale à 60 % en poids.

Les copolymères à blocs selon la présente invention contiennent, outre les unités monomériques dérivées du propylène, de l'éthylène et éventuellement d'une alpha-oléfine, de environ 0,001 à environ 20 % en poids d'unités monomériques dérivées d'un α,ω-diène par rapport au poids total du copolymère à blocs.

Les α,ω-diènes désignent des dioléfines contenant deux doubles liaisons carbone-carbone terminales. Les α,ω-diènes utilisables dans les copolymères à blocs selon l'invention contiennent en général de 6 à 30 atomes de carbone. Les α,ω-diènes préférés contiennent au moins 7 atomes de carbone. Le plus souvent, ils ne contiennent pas plus de 15 atomes de carbone. A titre d'exemples de ces composés, on peut citer le 1,6-heptadiène, le 1,7-octadiène, le 1,8-nonadiène, le 1,9-décadiène, le 1,10-undécadiène, le 1,11-dodécadiène, le 1,12-tridécadiène et le 1,13-tétradécadiène. Parmi ces composés, le 1,7-octadiène, le 1,8-nonadiène et le 1,9-décadiène donnent de bons résultats. Le 1,9-décadiène est plus particulièrement préféré.

Il va de soi que les copolymères à blocs selon l'invention qui contiennent des unités monomériques dérivées d'un ou de plusieurs α,ω-diènes entrent également dans le cadre de la présente invention.

La concentration en unités monomériques dérivées d'α,ω-diène dans les copolymères à blocs selon la présente invention est généralement supérieure ou égale à environ 0,01 % en poids par rapport au poids total du copolymère à blocs. De préférence, cette concentration est supérieure ou égale à environ 0,02 % en poids par rapport au poids total du copolymère à blocs. Le plus souvent, la concentration en unités monomériques dérivées d'α,ω-diène est inférieure ou égale à environ 10 % en poids par rapport au poids total du copolymère à blocs. On obtient de bons résultats lorsqu'elle n'est pas supérieure à environ 5 % en poids par rapport au poids total du copolymère à blocs. Les copolymères à blocs dont la concentration en unités monomériques dérivées d'α,ω-diène est de 0,02 à 10 % en poids par rapport à leur poids total conviennent bien.

Les copolymères à blocs du propylène selon la présente invention contiennent le plus souvent :
- 100 parties en poids d'un polymère (a) du propylène choisi parmi les homopolymères et les copolymères du propylène ne contenant pas plus de 6 % en poids d'éthylène et/ou d'une alpha-oléfine ayant de 4 à 6 atomes de carbone,
- de 1 à 100 parties en poids d'un polymère (b) d'éthylène choisi parmi les copolymères d'éthylène contenant au moins 30 % et pas plus de 70 % en poids de propylène et contenant en outre de environ 0.001 à environ 20 % en poids d'unités monomériques dérivées d'α,ω-diène par rapport au poids total du copolymère à blocs.

Des copolymères à blocs tout particulièrement préférés contiennent pour :
- 100 parties en poids d'un polymère (a) qui est un homopolymère du propylène,
- de 10 à 80 parties en poids d'un polymère (b) qui est un copolymère d'éthylène contenant de 40 à 60 % en poids de propylène et en outre de environ 0,02 à environ 5 % en poids d'unités monomériques dérivées d'un α,ω-diène.

Les copolymères à blocs selon la présente invention possèdent les propriétés habituelles des copolymères à blocs telles que un bon compromis rigidité - résistance aux chocs, une bonne résistance aux chocs à basse température etc. Le compromis rigidité - résistance aux chocs des copolymères à blocs selon l'invention est généralement supérieur à celui des copolymères à blocs dont le premier bloc est un homopolymère du propylène et dont le second bloc est un élastomère propylène éthylène.

Ils présentent en outre, du fait de la présence d'unités monomériques dérivées de l'α,ω-diène, un nombre relativement important de branchements qui leur confère une bonne tenue en fondu caractérisée par une viscosité élongationnelle élevée à bas gradient de vitesse.

Ces copolymères à blocs présentent également, à l'état fondu, une augmentation de la résistance à la déformation lors de l'allongement ou de l'extension. Un tel phénomène est généralement appelé "durcissement sous contrainte". Il peut aisément être caractérisé par la détermination, pour une température et une vitesse d'élongation données, de la variation de la viscosité élongationnelle du copolymère à blocs à l'état fondu en fonction de la durée d'élongation. Soumis à de tels tests, les copolymères à blocs selon la présente invention présentent une augmentation de la viscosité élongationnelle jusqu'à la rupture de la masse de polymère fondu, cette rupture étant généralement fragile.

Soumis à ces mêmes tests les copolymères à blocs de l'art antérieur ne présentent pas un tel phénomène.

Ces différentes propriétés rendent les copolymères à blocs selon la présente invention particulièrement aptes à être façonnés par extrusion ou par injection et en particulier par extrusion- ou injection-soufflage. Ces copolymères à blocs sont également aptes à être mis en oeuvre par thermoformage ou enduction. Ils conviennent également bien pour la formation de mousses.

Les copolymères à blocs selon la présente invention présentent en outre une large gamme d'indices de fluidité en fondu (MFI mesuré selon la norme ASTM D 1238 (1986)) et peuvent présenter des MFI plus petits que ceux habituellement rencontrés pour les copolymères à blocs de l'art antérieur. De ce fait les copolymères à blocs selon la présente invention qui présentent un MFI inférieur à 1 g/10 min, en particulier inférieur à 0,7 et plus particulièrement inférieur à 0,4 g/10 min constituent un aspect supplémentaire de l'invention. Ces copolymères à blocs particuliers conviennent particulièrement bien pour les applications nécessitant une très bonne tenue en fondu telles que décrites ci-avant.

Enfin les copolymères à blocs selon la présente invention présentent généralement également des insaturations provenant de l'incorporation dans les chaînes polymériques des unités dérivées d'α,ω-diène. Ces insaturations permettent, sans dégradations importantes du polymère, le greffage de monomères polaires tels qu'à titre d'exemple non limitatif de l'anhydride maléique. On peut ainsi améliorer les propriétés d'imprimabilité des copolymères à blocs, leur adhésion à différents supports, ainsi que l'adhésion de peinture sur les objets obtenus à partir de ces copolymères à blocs. Ces insaturations peuvent également être utilisées pour obtenir par des moyens appropriés une bonne compatibilité entre les polymères (a) et (b) constituant le copolymère à blocs.

De telles utilisations constituent dès lors également des aspects supplémentaires de la présente invention.

La présente invention concerne également un procédé d'obtention de ces copolymères à blocs. Les copolymères à blocs selon la présente invention sont généralement obtenus selon un procédé comprenant au moins deux étapes de polymérisation successives au cours desquelles on forme respectivement les polymères (a) et (b).

Le procédé selon la présente invention comprend dès lors au moins deux étapes de polymérisation successives dans lesquelles on met en oeuvre dans des conditions polymérisantes, en présence d'un système catalytique, à la première étape un mélange de monomères contenant :
- de environ 45 à environ 100 % en poids de propylène, et pouvant contenir en outre
- jusqu'à environ 5 % en poids d'éthylène et/ou d'une alpha-oléfine ayant de 4 à 6 atomes de carbone, et
- jusqu'à environ 50 % en poids d'α,ω-diène;
et à la deuxième étape un mélange d'éthylène, de propylène et d'α,ω-diène contenant :
- jusqu'à environ 90 % en poids de propylène, et
- jusqu'à environ 50 % en poids d'α,ω-diène,
la quantité minimale d'α,ω-diène étant d'au moins 0,005 % en poids.

La quantité minimale d'α,ω-diène mise en oeuvre dans au moins une de ces deux étapes est généralement d'environ 0,01 % en poids et plus particulièrement d'environ 0,1 % en poids.

La quantité d'α,ω-diène mise en oeuvre dans au moins une de ces deux étapes ne dépasse généralement pas 30 % en poids et plus particulièrement pas 20 % en poids du mélange de monomères mis en oeuvre à cette ou ces étapes.

L'α,ω-diène est mis en oeuvre au moins à la deuxième étape de polymérisation.

De préférence l'α,ω-diène est mis en oeuvre exclusivement à la deuxième étape de polymérisation.

Le procédé selon la présente invention est généralement mis en oeuvre de manière telle que l'on forme, à la deuxième étape, de 1 à 100 parties en poids de polymère pour 100 parties en poids de polymère formé à la première étape.

La première et la deuxième étape sont en outre le plus souvent réalisées dans des conditions telles que les quantités respectives de polymère formé soient celles décrites ci-avant en rapport avec les polymères (a) et (b) des copolymères à blocs selon l'invention.

Les deux étapes de polymérisation du procédé selon l'invention peuvent être effectuées successivement dans le même réacteur. La deuxième étape est alors effectuée en présence du polymère formé à la première étape et après avoir enlevé complètement ou partiellement les monomères n'ayant pas réagi. Ces deux étapes peuvent également être effectuées dans deux réacteurs disposés en série. La deuxième étape est alors effectuée dans le deuxième réacteur en présence du polymère formé à la première étape et après avoir éliminé complètement ou partiellement les monomères provenant du premier réacteur et n'ayant pas réagi.

Le procédé de polymérisation selon la présente invention est avantageusement effectué dans deux réacteurs en série.

La première étape du procédé selon la présente invention est généralement réalisée en l'absence d'alpha-oléfine ayant de 4 à 6 atomes de carbone. On obtient en outre de bons résultats lorsque l'on ne met pas d'éthylène en oeuvre lors de la réalisation de cette étape.

La première étape du procédé selon l'invention est de préférence une étape d'homopolymérisation du propylène.

Les monomères mis en oeuvre lors de la deuxième étape sont généralement l'éthylène, le propylène et l'α,ω-diène. Par ailleurs on obtient de bons résultats lorsque les quantités respectives d'éthylène et de propylène mis en oeuvre sont telles que le rapport en poids de ces monomères dans le polymère formé lors de cette étape est supérieur ou égal à 0,4 et plus particulièrement supérieur ou égal à 0,65. Ces quantités sont en outre le plus souvent telles que le rapport en poids de ces monomères dans le polymère formé lors de cette étape est inférieur ou égal à 2,4, de préférence inférieur ou égal à 1,5.

La quantité d'α,ω-diène mise en oeuvre dans le procédé selon l'invention est généralement telle que la composition globale du copolymère à blocs qui y est formé soit celle décrite ci-avant en rapport avec les copolymères à blocs selon l'invention.

Dans les procédés selon la présente invention, la polymérisation peut être effectuée selon n'importe quel procédé connu. On peut effectuer cette polymérisation en solution ou en suspension dans un diluant hydrocarboné inerte généralement choisi parmi les hydrocarbures aliphatiques, cycloaliphatiques et aromatiques liquides tels que par exemples les alcanes et isoalcanes liquides, le benzène et ses dérivés. Des diluants hydrocarbonés utilisés préférentiellement sont : le butane, l'isobutane, l'hexane, l'heptane, le cyclohexane, le méthylcyclohexane ou leurs mélanges. L'hexane et l'heptane conviennent bien. On peut également opérer la polymérisation dans le monomère ou dans un des monomères maintenu à l'état liquide ou encore en phase gazeuse.

On peut également effectuer la première et la deuxième étape selon deux procédés différents.

Avantageusement au moins la deuxième étape est effectuée en suspension dans un solvant hydrocarboné tel que décrit ci-avant.

La température de polymérisation est choisie généralement de 20 à 200 °C et de préférence de 50 à 90 °C. La pression est choisie le plus souvent entre la pression atmosphérique et 50 atmosphères. La température et la pression sont bien entendu fonction l'une de l'autre et de la nature du procédé de polymérisation mis en oeuvre.

Le procédé préféré selon la présente invention comprend deux étapes de polymérisation effectuées en suspension dans un solvant hydrocarboné.

Dans ce cas particulier, les quantités de monomères mises en oeuvre à la première étape sont telles que le rapport des fractions molaires de l'éthylène et du propylène dans la phase liquide est inférieur ou égal à environ 0,015 et le rapport des fractions molaires d'α,ω-diène et du propylène dans la phase liquide est inférieur ou égal à environ 5.

Par ailleurs les quantités de monomères mises en oeuvre à la deuxième étape sont telles que le rapport des fractions molaires de l'éthylène et du propylène dans la phase liquide est supérieur ou égal à environ 0,06 et inférieur ou égal à environ 0,14 et le rapport des fractions molaires d'α,ω-diène et du propylène dans la phase liquide est inférieur ou égal à 5.

On obtient de bons résultats lorsque les quantités de monomères mises en oeuvre pour l'obtention des copolymères à blocs selon l'invention sont telles que :
- à la première étape, le rapport des fractions molaires de l'éthylène et du propylène dans la phase liquide est inférieur ou égal à environ 0,015 et le rapport des fractions molaires d'α,ω-diène et du propylène dans la phase liquide est inférieur ou égal à environ 5, et
- à la deuxième étape, le rapport des fractions molaires de l'éthylène et du propylène dans la phase liquide est supérieur ou égal à environ 0,06 et inférieur ou égal à environ 0,14 et le rapport des fractions molaires d'α,ω-diène et du propylène dans la phase liquide est inférieur ou égal à environ 5.

A la première étape, le rapport des fractions molaires de l'éthylène et du propylène dans la phase liquide est de préférence inférieur ou égal à environ 0,006. Lorsque l'on met en oeuvre un α,ω-diène à la première étape, les quantités de monomères mises en oeuvre sont le plus souvent telles que le rapport des fractions molaires d'α,ω-diène et du propylène dans la phase liquide est inférieur ou égal à environ 2,5 et plus particulièrement inférieur ou égal à environ 1,5. De préférence on ne met pas en oeuvre d'éthylène. On obtient de bons résultats lorsque l'on ne met pas d'α,ω-diène en oeuvre à la première étape. Les meilleurs résultats sont obtenus lorsque l'on met en oeuvre exclusivement du propylène à la première étape.

A la deuxième étape, le rapport des fractions molaires de l'éthylène et du propylène dans la phase liquide est de préférence inférieur ou égal à environ 0,12. Il est en outre le plus souvent supérieur ou égal à environ 0,08. Les quantités d'α,ω-diène mises en oeuvre à cette deuxième étape sont le plus souvent telles que le rapport des fractions molaires d'α,ω-diène et du propylène dans la phase liquide est inférieur ou égal à environ 2,5, plus particulièrement inférieur ou égal à environ 1,5. Ce rapport est en outre généralement d'au moins 2 10⁻⁴ le plus souvent d'au moins 2 10⁻³ et de préférence d'au moins 5 10⁻³.

Lorsque la polymérisation est effectuée dans un diluant hydrocarboné, on remarque, de manière étonnante, que la présence de l'α,ω-diène conduit à une diminution de la quantité de polymère soluble dans le milieu de polymérisation. Un tel comportement est particulièrement avantageux lors de la production du polymère (b). En effet, il permet une plus grande incorporation du bloc élastomérique dans le copolymère à blocs final sans observer des problèmes de collage des particules de polymère entre elles et/ou sur les parois du réacteur. On obtient ainsi de manière aisée des copolymères à blocs contenant une plus grande proportion de fraction élastomérique qui possèdent une résistance aux chocs particulièrement élevée. Un tel phénomène est également observé lorsque la polymérisation est effectuée dans un des monomères maintenu à l'état liquide.

Par ailleurs, à teneur en polymère (b) constante, les copolymères à blocs qui contiennent un α,ω-diéne sont obtenus avec un meilleur rendement économique et présentent un meilleure morphologie.

Les systèmes catalytiques utilisables dans les procédés selon la présente invention comprennent généralement un solide catalytique contenant au moins un métal de transition appartenant au groupe IVb du Tableau Périodique et un activateur généralement choisi parmi les composés organoaluminiques.

Ces systèmes catalytiques sont bien connus de l'homme du métier.

Les systèmes catalytiques préférés selon la présente invention contiennent, à titre de solide catalytique, un solide à base de trichlorure de titane (TiCl₃) complexé tel que décrit par exemple dans les brevets Etats-Unis US-A-4210738, US-A-4210736 et US-A-5206108 (SOLVAY) et dans la demande de brevet EP-A-261727 (SOLVAY) dont le contenu est incorporé par référence dans la présente description. Il s'avère avantageux pour l'obtention des copolymères à blocs présentant une particulièrement belle morphologie d'utiliser des solides catalytiques qui ont en outre subi un traitement de prépolymérisation consistant à les mettre en contact avec une alpha-oléfine, telle que de préférence le propylène ou l'éthylène, dans des conditions polymérisantes de manière à obtenir des solides contenant au moins 50 % en poids de polymère par rapport au poids de trichlorure de titane. La quantité maximale de prépolymère n'est pas critique. Pour des raisons économiques, on préfere qu'elle ne soit pas supérieure à 2000 % en poids par rapport au TiCl₃. De préférence la quantité de polymère produite lors de cette étape est supérieure à 100 g par kg de TiCl₃. Des quantités de prépolymère inférieures à 1000 g par kg de TiCl₃ donnent des résultats satisfaisants. La prépolymérisation est généralement effectuée à la fin de la préparation du solide catalytique. Elle peut également être effectuée dans une étape de polymérisation précédant directement les étapes de production des polymères (a) et (b).

L'activateur organoaluminique est généralement choisi parmi les composés répondant à la formule :

Al R¹ ₙ X₃₋ₙ

dans laquelle
- R¹ est un radical hydrocarboné contenant de 1 à 18 atomes de carbone;
- X est un halogène; et
- n est un nombre tel que 0 < n ≤ 3.

On constate de manière surprenante que, lorsque le solide catalytique est un solide à base de TiCl₃, les propriétés des copolymères à blocs dépendent de la nature du système catalytique utilisé pour leur obtention et en particulier de la nature de l'activateur organoaluminique.

C'est ainsi que, de manière générale, l'utilisation d'un activateur organoaluminique halogéné conduit à des copolymères à blocs présentant préférentiellement des chaînes polymériques branchées qui leur confèrent les propriétés rhéologiques intéressantes également décrites ci-avant.

Par ailleurs l'utilisation d'un activateur organoaluminique non halogéné tel que par exemple un trialkylaluminium favorise en outre la présence d'insaturations dans les chaînes polymériques ce qui donne accès, éventuellement après transformation chimique, aux propriétés d'adhésion et d'imprimabilité décrites ci-avant.

De ce fait, le procédé d'obtention selon la présente invention présente l'avantage de pouvoir par une simple modification de la nature de l'activateur conduire à l'obtention de copolymères à blocs présentant des propriétés différentes.

Les systèmes catalytiques utilisables pour l'obtention des copolymères à blocs selon la présente invention peuvent également contenir au moins un terconstituant connu pour améliorer leur stéréospécificité et/ou leur activité.

Les différents constituants des systèmes catalytiques utilisables dans les procédés selon la présente invention sont généralement introduits en totalité lors de la première étape de polymérisation.

La quantité totale des différents constituants des systèmes catalytiques utilisables selon la présente invention n'est pas critique et fait partie des connaissances générales de l'homme du métier. La quantité totale d'activateur mis en oeuvre est généralement supérieure à 0,1 mmole par litre de diluant, de monomère liquide ou de volume de réacteur, de préférence supérieure à 0,5 mmole par litre. Lorsque le solide catalytique est un solide catalytique à base de TiCl₃, la quantité de solide catalytique mise en oeuvre est déterminée en fonction de sa teneur en TiCl₃. Elle est choisie le plus souvent de manière à ce que la concentration du milieu de polymérisation soit supérieure à 0,01 mmole de TiCl₃ par litre de diluant, de monomère liquide ou de volume de réacteur et de préférence supérieure à 0,05 mmole par litre. Le rapport des quantités de composé organoaluminique et de solide catalytique à base de TiCl₃ est généralement choisi de manière à ce que le rapport molaire de l'activateur au TiCl₃ soit compris entre 0,5 et 20, de préférence entre 1 et 15. Les meilleurs résultats sont obtenus lorsque le rapport molaire est compris entre 2 et 12.

La masse moléculaire moyenne des copolymères à blocs selon la présente invention peut être réglée par l'addition au milieu de polymérisation d'un ou plusieurs agents de réglage de la masse moléculaire moyenne comme l'hydrogène, le diéthylzinc, les alcools, les éthers et les halogénures d'alkyle. L'hydrogène convient particulièrement bien.

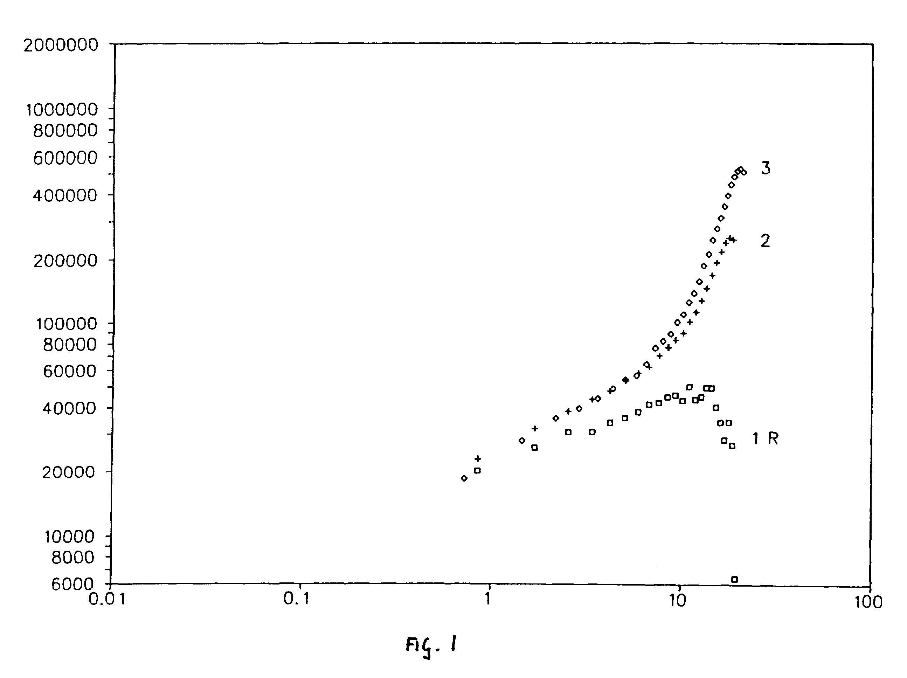

Les exemples suivants servent à illustrer l'invention. La viscosité élongationnelle des copolymères à blocs obtenus dans ces exemples est déterminée au moyen d'un rhéomètre commercialisé par RHEOMETRICS sous la dénomination RHEOMETRICS EXTENSIONAL RHEOMETRE RER-9000. La figure unique ci-jointe reprend les courbes de variation de la viscosité élongationnelle à l'état fondu (exprimé en Pa.s) en fonction de la durée d'élongation (exprimée en s) pour des gradients de vitesse d'élongation de 0,1 s⁻¹. Ces courbes ont été relevées à 190 °C. La courbe 1R concerne l'exemple 1R et les courbes 2 et 3 concernent respectivement les exemples 2 et 3. La signification des symboles utilisés dans ces exemples, les unités exprimant les grandeurs mentionnées et les méthodes de mesure de ces grandeurs sont explicitées ci-après.

| | |
|---|---|
| prod = | productivité catalytique exprimée conventionnellement en grammes de polymère obtenus par gramme de TiCl₃ contenu dans le solide catalytique. Cette activité est appréciée indirectement à partir de la détermination de la teneur résiduelle en titane dans le polymère par fluorescence X. |
| Sol = | quantité de polymère soluble dans le milieu de polymérisation exprimée en % en poids par rapport à la quantité totale de polymère recueilli. |
| PSA = | poids spécifique apparent du polymère insoluble exprimé en g/dm³. |
| MFI = | indice de fluidité en fondu mesuré sous une charge de 2,16 kg à 230 °C et exprimé en g/10 min (norme ASTM D 1238 (1986)). |
| Flex. Mod. = | module de flexion des copolymères à blocs mesuré selon la norme ISO 178 (1993) exprimé en MPa. |
| g = | module de rigidité en torsion des copolymères à blocs, mesuré à 100 °C et pour un angle de torsion de 60 °C d'arc, la température du moule étant fixée à 70 °C et la durée de conditionnement à 5 minutes (norme ASTM D 1043 (1987)). Ce module est exprimé en daN/cm². |
| Izod = | mesure de résilience des polymères, exprimée en kJ/m² mesurée selon la norme ISO 180/1A (1993). |
| Temp. Frag. = | température de fragilité des polymères mesurée selon ASTM D 746 exprimée en °C. |

### Exemple 1R

Cet exemple est donné à titre de référence. Il illustre les copolymères à blocs ne contenant pas d'α,ω-diène.

### A - Préparation du solide catalytique

Dans un réacteur de 800 ml, on introduit, sous atmosphère d'azote et sous agitation, 90 ml d'hexane et 60 ml de TiCl₄. Cette solution hexane-TiCl₄ est refroidie à 0 (± 1) °C et on y additionne durant 4 heures une solution constituée de 190 ml d'hexane et de 70 ml de chlorure de diéthylaluminium (DEAC) en maintenant une température de 0 °C dans le réacteur.

Le milieu de réaction. constitué par une suspension de fines particules. est ensuite maintenu sous agitation à cette température pendant 15 min, puis est porté en 1 heure à 25 °C et maintenu 1 heure à cette température avant d'être porté en 1 heure environ à 65 °C. Le milieu est maintenu sous agitation pendant 2 heures à 65 °C puis on le refroidit à environ 55 °C et on introduit, dans le ciel gazeux du réacteur, du propylène sous une pression de 2 bars. Cette introduction est poursuivie pendant un temps suffisant (environ 45 min) pour obtenir, par kg de solide final, 65 g de propylène polymérisé. La suspension du solide ainsi prépolymérisé est ensuite refroidie à 40 °C et lavée à l'hexane.

Le solide réduit est alors mis en suspension dans 456 ml d'hexane et on y ajoute 86 ml d'éther diisoamylique (EDIA). La suspension est agitée à 250 tr/min pendant 1 heure à 50 °C puis décantée. Après avoir éliminé le surnageant, on remet le solide en suspension dans 210 ml d'hexane et on y ajoute 52 ml de TiCl₄. La suspension est ensuite maintenue sous agitation (150 tr/min) à 75 °C pendant 2 heures. Après lavage, le solide à base de TiCl₃ complexé est remis en suspension dans de l'hexane (à raison de 4 ml d'hexane par gramme de solide) et mis en contact avec 120 ml d'une solution contenant, par litre d'hexane, 80 g de DEAC et 176 g de 3-(3',5'-di-tert-butyl-4'-hydroxyphényl)propionate de n-octadécyle.

La suspension ainsi additionnée est maintenue pendant 1 heure à 30 °C sous agitation avant d'introduire du propylène sous une pression de 2 bars pendant un temps suffisant (environ 30 min) pour obtenir 170 g de PP par kg de produit final sec.

Le solide catalytique contient après lavage et séchage, par kg, 630 g de TiCl₃.

### B. Préparation du copolymère à blocs

Dans un autoclave de 51, préalablement séché, on introduit sous balayage d'azote sec :
- 1,5 litre d'hexane,
- 700 mg de DEAC,
- 20 mg de benzoate d'éthyle.

L'autoclave est alors chauffé à 60 °C et remis à pression atmosphérique de propylène avant d'y introduire successivement une pression d'hydrogène de 1 bar, une pression de propylène de 4 bars et une quantité de solide catalytique tel que décrit au point A suffisante pour que la quantité de TiCl₃ introduite dans le réacteur soit de environ 120 mg.

On maintient le réacteur à 60 °C pendant 3 heures tout en l'alimentant en propylène de manière à maintenir la pression du réacteur constante. Dans ces conditions la fraction molaire du propylène dans la phase liquide est de 0,25.

Après 3 heures de polymérisation, on amène la température de l'autoclave à 45 °C tout en le dégazant jusqu'à une pression de 3 bars.

On introduit alors environ 0,03 bars d'hydrogène, on ajuste au moyen de propylène la pression à 3,1 bars puis à 4,6 bars par ajout d'éthylène.

Le polymère (b) est obtenu en polymérisant dans ces conditions pendant 1 heure et en maintenant constante la composition de la phase gazeuse.

La fraction molaire d'éthylène dans la phase liquide est de 0,028 et celle de propylène est de 0,253.

On obtient ainsi avec une productivité prod de 3653 un copolymère à blocs présentant les propriétés suivantes :
Sol = 3,2
PSA = 500
MFI = 5,4

Teneur en éthylène dans le copolymère à blocs final = 9 % en poids.

### Exemples 2 à 4

Ces exemples illustrent l'obtention de copolymères à blocs selon l'invention dont le polymère (a) est un homopolymère du propylène et dont le polymère (b) est un copolymère éthylène propylène contenant un α,ω-diène : le 1,9-décadiène.

Le solide catalytique utilisé pour la réalisation de ces exemples est celui de l'exemple 1.

Le copolymère à blocs est obtenu en reproduisant le mode opératoire de l'exemple 1 mais en introduisant l'α,ω-diène après le dégazage de l'autoclave à 3 bars pour la préparation du polymère (b).

Les conditions d'obtention de ces copolymères à blocs de même que leurs propriétés sont reprises dans le Tableau I.

**Tableau I**

| Exemples | 2 | 3 | 4 |
|---|---|---|---|
| Préparation du Polymère (b) | | | |
| α,ω-diène mis en oeuvre (ml) | 5 | 10 | 50 |
| Fraction molaire d'éthylène dans la phase liquide | 0,028 | - | 0,028 |
| Fraction molaire de propylène dans la phase liquide | 0,253 | - | 0,253 |
| Fraction molaire d'α,ω-diène dans la phase liquide | 1,510⁻³ | - | 0,015 |

| Résultats en polymérisation | | | |
|---|---|---|---|
| prod | 3653 | 3741 | 3787 |
| Quantité de polymère (b) | 18 | 18 | 18 |
| Quantité de polymère (a) | 82 | 82 | 82 |
| Sol | 1,7 | 1,4 | 1,2 |
| PSA | 507 | 507 | 508 |
| MFI | 1 | 0,9 | 0,2 |
| Teneur en éthylène dans le copolymère à blocs final (% en poids) | 8 | 8 | 8 |

La comparaison de ces résultats avec ceux de l'exemple 1 donné par référence permet de mettre en évidence le faible taux de soluble observé lorsque la polymérisation est effectuée en présence d'α,ω-diène, ainsi que la bonne morphologie des copolymères à blocs obtenus.

L'examen des courbes reprises à la figure unique montre clairement que les copolymères à blocs selon la présente invention présentent le phénomène de durcissement sous tension.

### Exemple 5

On reproduit l'exemple 2 sauf en ce qui concerne la durée de polymérisation de l'étape de formation du polymère (b) (1,5 heure) et en ce qui concerne la quantité d'α,ω-diène mise en oeuvre (20 ml).

Les propriétés du copolymère à blocs obtenu sont :
prod = 3833; Quantité de polymère (a) = 73; Quantité de polymère (b) = 27: Sol = 2,2; PSA = 489; MFI = 0,2; Teneur en éthylène dans le copolymère à blocs final = 12 % en poids.

### Exemple 6R

L'exemple 5 est reproduit en omettant d'introduire l'α,ω-diène.

Les propriétés du copolymère à blocs obtenu sont :
prod = 3833; Quantité de polymère (a) = 73; Quantité de polymère (b) = 27; Sol = 4,0; PSA = 487; MFI = 3,2; Teneur en éthylène dans le copolymère à blocs final = 12 % en poids.

### Exemple de référence 7R et exemple selon l'invention 8

### A. Préparation du solide catalytique

Le solide catalytique est préparé comme décrit à l'exemple 1R, partie A mais en omettant le traitement final au propylène.

### B. Préparation des copolymères à blocs

L'exemple 7R est réalisé en reproduisant la partie B de l'exemple 1R. Le copolymère à blocs selon l'exemple 8 est obtenu en reproduisant l'exemple 2. Les propriétés des copolymères à blocs obtenus sont reprises dans le Tableau II ci-après.

**Tableau II**

| Exemples | 7R | 8 |
|---|---|---|
| prod | 3339 | 3450 |
| Quantité de polymère (b) | 18 | 18 |
| Quantité de polymère (a) | 82 | 82 |
| Sol | 3,8 | 3 |
| PSA | 486 | 488 |
| MFI | 11,6 | 1,9 |
| Teneur en éthylène dans le copolymère à blocs final | 8 | 8 |
| Flex. Mod. | 1350 | 1378 |
| g | 680 | 675 |
| Izod | 3,7 | 4,2 |
| Temp. Frag. | - 23 | - 33 |

La comparaison de ces résultats permet de mettre en évidence le meilleur compromis résistance aux chocs - rigidité des copolymères à blocs selon l'invention.

## Revendications

1. Copolymère à blocs du propylène contenant pour :
- 100 parties en poids d'un polymère (a) du propylène choisi parmi les homopolymères et les copolymères du propylène ne contenant pas plus de 6 % en poids d'éthylène et/ou d'une alpha-oléfine ayant de 4 à 6 atomes de carbone,
- de 1 à 100 parties en poids d'un polymère (b) d'éthylène choisi parmi les copolymères d'éthylène contenant au moins 30 % et pas plus de 90 % en poids de propylène, caractérisé en ce que le polymère (b) contient en outre de environ 0,001 à environ 20 % en poids d'unités monomériques dérivées d'α,ω-diène par rapport au poids total du copolymère à blocs.

2. Copolymère à blocs selon la revendication 1, dans lequel l'α,ω-diène contient de 6 à 30 atomes de carbone.

3. Copolymère à blocs selon la revendication 2, dans lequel l'α,ω-diène est choisi parmi le 1,6-heptadiène, le 1,7-octadiène, le 1,8-nonadiène, le 1,9-décadiène, le 1,10-undécadiène, le 1,11-dodécadiène, le 1,12-tridécadiène et le 1,13-tétradécadiène.

4. Copolymère à blocs selon la revendication 3, dans lequel l'α,ω-diène est le 1,9-décadiène.

5. Copolymère à blocs selon l'une quelconque des revendications 1 à 4, dans lequel la concentration en unités monomériques dérivées d'α,ω-diène est de 0,02 à 10 % en poids par rapport au poids total du copolymère à blocs.

6. Copolymère à blocs selon l'une quelconque des revendications 1 à 5 contenant pour :
- 100 parties en poids d'un polymère (a) qui est un homopolymère du propylène,
- de 10 à 80 parties en poids d'un polymère (b) qui est un copolymère d'éthylène contenant de 40 à 60 % en poids de propylène et en outre de environ 0,02 à environ 5 % en poids d'unités monomériques dérivées d'un α,ω-diène.

7. Copolymère à blocs selon l'une quelconque des revendications 1 à 6, caractérisé en ce qu'il présente du durcissement sous contrainte.

8. Copolymère à blocs selon l'une quelconque des revendications 1 à 7, présentant un MFI inférieur à 1 g/10 min.

9. Utilisation d'un copolymère à blocs selon l'une quelconque des revendications 1 à 8 pour l'obtention d'objets façonnés par extrusion- ou injection-soufflage.

10. Utilisation d'un copolymère à blocs selon l'une quelconque des revendications 1 à 8 pour l'obtention d'objets façonnés par thermoformage ou enduction.

11. Utilisation d'un copolymère à blocs selon l'une quelconque des revendications 1 à 8 pour la formation de mousses.

12. Procédé d'obtention d'un copolymère à blocs comprenant au moins deux étapes de polymérisation successives dans lesquelles on met en oeuvre dans des conditions polymérisantes, en présence d'un système catalytique, à la première étape un mélange de monomères contenant :
- de environ 45 à environ 100 % en poids de propylène, et pouvant contenir en outre
- jusqu'à environ 5 % en poids d'éthylène et/ou d'une alpha-oléfine ayant de 4 à 6 atomes de carbone, et
- jusqu'à environ 50 % en poids d'α,ω-diène;
et à la deuxième étape un mélange d'éthylène, de propylène et d'α,ω-diène contenant :
- jusqu'à environ 90 % en poids de propylène, et
- jusqu'à environ 50 % en poids d'α,ω-diène,
la quantité minimale d'α,ω-diène étant d'au moins 0,005 % en poids.

13. Procédé selon la revendication 12, appliqué à l'obtention d'un copolymère à blocs selon l'une quelconque des revendications 1 à 8.

14. Procédé selon l'une quelconque des revendications 12 ou 13, dans lequel on ne met en oeuvre l'α,ω-diène qu'à la deuxième étape.

15. Procédé selon l'une quelconque des revendications 12 ou 13, dans lequel la polymérisation est effectuée en suspension dans un hydrocarbure aliphatique.

16. Procédé selon la revendication 15, dans lequel les quantités des monomères mises en oeuvre sont telles que :
- à la première étape, le rapport des fractions molaires de l'éthylène et du propylène dans la phase liquide est inférieur ou égal à environ 0,015 et le rapport des fractions molaires d'α,ω-diène et du propylène dans la phase liquide est inférieur ou égal à environ 5, et
- à la deuxième étape, le rapport des fractions molaires de l'éthylène et du propylène dans la phase liquide est supérieur ou égal à environ 0,06 et inférieur ou égal à environ 0,14 et le rapport des fractions molaires d'α,ω-diène et du propylène dans la phase liquide est inférieur ou égal à environ 5.

17. Procédé selon la revendication 16, dans lequel on met en oeuvre exclusivement du propylène à la première étape.

18. Procédé selon l'une quelconque des revendications 12 à 17, dans lequel la polymérisation est effectuée au moyen d'un système catalytique contenant un solide à base de TiCl₃ complexé et un activateur choisi parmi les composés organoaluminiques.

19. Procédé selon la revendication 18, dans lequel le solide catalytique à base de TiCl₃ complexé a subi un traitement de prépolymérisation de manière à y incorporer au moins 50 % en poids de polymère par rapport au poids de TiCl₃.

## Claims

1. Propylene block copolymer containing per :
- 100 parts by weight of a polymer (a) of propylene chosen from homopolymers and copolymers of propylene not containing more than 6% by weight of ethylene and/or of an alpha-olefin having from 4 to 6 carbon atoms,
- from 1 to 100 parts by weight of a polymer (b) of ethylene chosen from copolymers of ethylene containing at least 30% and not more than 90% by weight of propylene, characterized in that the polymer (b) additionally contains from approximately 0.001 to approximately 20% by weight of α,ω-diene-derived monomer units with respect to the total weight of the block copolymer.

2. Block copolymer according to Claim 1, in which the α,ω-diene contains from 6 to 30 carbon atoms.

3. Block copolymer according to Claim 2, in which the α,ω-diene is chosen from 1,6-heptadiene, 1,7-octadiene, 1,8-nonadiene, 1,9-decadiene, 1,10-undecadiene, 1,11-dodecadiene, 1,12-tridecadiene and 1,13-tetradecadiene.

4. Block copolymer according to Claim 3, in which the α,ω-diene is 1,9-decadiene.

5. Block copolymer according to any one of Claims 1 to 4, in which the concentration of α,ω-diene-derived monomer units is from 0.02 to 10% by weight with respect to the total weight of the block copolymer.

6. Block copolymer according to any one of Claims 1 to 5 containing per :
- 100 parts by weight of a polymer (a) which is a homopolymer of propylene,
- from 10 to 80 parts by weight of a polymer (b) which is an ethylene copolymer containing from 40 to 60% by weight of propylene and in addition from approximately 0.02 to approximately 5% by weight of monomer units derived from an α,ω-diene.

7. Block copolymer according to any one of Claims 1 to 6, characterized in that it exhibits stress hardening.

8. Block copolymer according to any one of Claims 1 to 7 exhibiting an MFI of less than 1 g/10 min.

9. Use of a block copolymer according to any one of Claims 1 to 8 for the production of shaped articles by extrusion blow-moulding or injection blow-moulding.

10. Use of a block copolymer according to any one of Claims 1 to 8 for the production of shaped articles by thermoforming or coating.

11. Use of a block copolymer according to any one of Claims 1 to 8 for the formation of foams.

12. Process for the production of a block copolymer comprising at least two successive polymerization stages in which use is made, under polymerizing conditions, in the presence of a catalytic system, in the first stage, of a mixture of monomers containing :
- from approximately 45 to 100% by weight of propylene and which can in addition contain
- up to approximately 5% by weight of ethylene and/or of an alpha-olefin having from 4 to 6 carbon atoms and - up to approximately 50% by weight of α,ω-diene;
and, in the second stage, of a mixture of ethylene, of propylene and of α,ω-diene containing :
- up to approximately 90% by weight of propylene and
- up to approximately 50% by weight of α,ω-diene,
the minimum amount of α,ω-diene being at least 0.005% by weight.

13. Process according to Claim 12, applied to the production of a block copolymer according to any one of Claims 1 to 8.

14. Process according to either one of Claims 12 and 13, in which the α,ω-diene is only used in the second stage.

15. Process according to either one of Claims 12 and 13, in which the polymerization is carried out in suspension in an aliphatic hydrocarbon.

16. Process according to Claim 15, in which the amounts of the monomers used are such that :
- in the first stage, the ratio of the molar fractions of ethylene and of propylene in the liquid phase is less than or equal to approximately 0.015 and the ratio of the molar fractions of α,ω-diene and of propylene in the liquid phase is less than or equal to appoximately 5, and
- in the second stage, the ratio of the molar fractions of ethylene and of propylene in the liquid phase is greater than or equal to approximately 0.06 and less than or equal to approximately 0.14 and the ratio of the molar fractions of α,ω-diene and of propylene in the liquid phase is less than or equal to approximately 5.

17. Process according to Claim 16, in which exclusively propylene is used in the first stage.

18. Process according to any one of Claims 12 to 17, in which the polymerization is carried out by means of a catalytic system containing a complexed solid based on TiCl₃ and an activator chosen from organoaluminium compounds.

19. Process according to Claim 18, in which the complexed catalytic solid based on TiCl₃ has been subjected to a prepolymerization treatment so as to incorporate therein at least 50% by weight of polymer with respect to the weight of TiCl₃.

## Patentansprüche

1. Propylenblock-Copolymer enthaltend pro:
- 100 Gewichtsteile eines Polymers (a) von Propylen ausgewählt aus Homopolymeren und Copolymeren von Propylen mit nicht mehr als 6 Gew.-% Ethylen und/oder einem α-Olefin mit 4 bis 6 Kohlenstoffatomen
- 1 bis 100 Gewichtsteile eines Polymers (b) von Ethylen ausgewählt aus Ethylencopolymeren, die mindestens 30% und nicht mehr als 90 Gew.-% Propylen enthalten, dadurch gekennzeichnet, daß das Polymer (b) ausserdem ungefähr 0,001 bis ungefähr 20 Gew.-% monomere Einheiten enthält, die abgeleitet sind von einem α,ω-Dien bezogen auf das Gesamtgewicht des Blockcopolymers.

2. Blockcopolymer nach Anspruch 1, worin das α,ω-Dien 6 bis 30 Kohlenstoffatome enthält.

3. Blockcopolymer nach Anspruch 2, worin das α, ω-Dien ausgewählt ist aus 1,6-Heptadien, 1,7-Octadien, 1,7-nonadien, 1,9-Decadien, 1,10-Undecadien, 1,11-Dodecadien, 1,12-Tridecadien und 1,13-Tetradecadien.

4. Blockcopolymer nach Anspruch 3, worin das α,ω-Dien 1,9-Decadien ist.

5. Blockcopolymer nach einem der Ansprüche 1 bis 4, worin die Konzentration an monomeren Einheiten, die von einem α,ω-Dien abgeleitet sind, 0,02 bis 10 Gew.-%, bezogen auf das Gesamtgewicht des Blockpolymers ist.

6. Blockcopolymer nach einem der Ansprüche 1 bis 5 enthaltend pro
- 100 Gewichtsteile eines Polymers (a), das ein Homopolymer von Propylen ist,
- 10 bis 80 Gewichtsteile eines Polymers (b), das ein Ethylencopolymer ist, das 40 bis 60 Gew.-% Propylen und ausserdem ungefähr 0,02 bis ungefähr 5 Gew.-% monomere Einheiten, die von einem α,ω-Dien abgeleitet sind, enthält.

7. Blockcopolymer nach einem der Ansprüche 1 bis 6, dadurch gekennzeichnet, daß es unter Spannung härtet.

8. Blockcopolymer nach einem der Ansprüche 1 bis 7 mit einemMFI von < 1g/10 min.

9. Verwendung eines Blockcopolymers nach einem der Ansprüche 1 bis 8, um mit Extrusion oder Spritzblasen geformte Gegenstände zu erhalten.

10. Verwendung eines Blockcopolymers nach einem der Ansprüche 1 bis 8, um durch Wärmeformung oder Beschichtung gebildete Gegenstände zu erhalten.

11. Verwendung eines Blockcopolymers nach einem der Ansprüche 1 bis 8, um Schäume zu bilden.

12. Verfahren, um ein Blockcopolymer zu erhalten mit mindestens 2 aufeinanderfolgenden Polymerisationsstufen, bei denen unter polymerisierenden Bedingungen in Gegenwart eines katalytischen Systems in der ersten Stufe eine Mischung von Monomeren, die
- ungefähr etwa 45 bis ungefähr 100 Gew.-% Propylen enthält und ausserdem
- bis zu ungefähr 5 Gew.-% Ethylen und/oder ein α-Olefin mit 4 bis 6 Kohlenstoffatomen und
- bis zu ungefähr 50 Gew.-% eines α,ω-Diens enthalten kann; und
in einer zweiten Stufe eine Mischung von Ethylen, Propylen und α,ω-Dien eingesetzt wird, die
- bis zu 90 Gew.-% Propylen und
- bis zu 50 Gew.-% α,ω-Dien enthält,
wobei die minimale Menge an α,ω-Dien mindestens 0,005 Gew.-% ist.

13. Verfahren nach Anspruch 12, daß angewendet wird um ein Blockcopolymer nach einem der Ansprüche 1 bis 8 zu erhalten.

14. Verfahren nach einem der Ansprüche 12 oder 13, worin man das α,ω-Dien erst in der zweiten Stufe einsetzt.

15. Verfahren nach einem der Ansprüche 12 oder 13, worin die Polymerisation in Suspension in einem aliphatischen Kohlenwasserstoff durchgeführt wird.

16. Verfahren nach Anspruch 15, worin die Mengen der eingesetzten Monomeren wie folgt sind:
- in der ersten Stufe ist das molare Verhältnis von Ethylen zu Propylen in der flüssigen Phase ≤ ungefär 0,015 und das molare Verhältnis von α,ω-Dien zu Propylen in der flüssigen Phase ist ≤ 5 und
- in der zweiten Stufe ist das molare Verhältnis von Ethylen zu Propylen in der flüssigen Phase ≥ ungefähr 0,06 und ≤ etwa 0,14 und das molare Verhältnis von α,ω-Dien zu Propylen in der flüssigen Phase ist ungefähr ≤ 5.

17. Verfahren nach Anspruch 16, worin man ausschließlich Propylen in der ersten Stufe einsetzt.

18. Verfahren nach einem der Ansprüche 12 bis 17, worin die Polymerisation mit Hilfe eines katalytischen Systems durchgeführt wird, das einen Feststoff auf Basis von TiCl₃ enthält, das mit einem Aktivator komplexiert ist, der ausgewählt ist aus Organoaluminiumverbindungen.

19. Verfahren nach Anspruch 18, worin der komplexierte katalytische Feststoff auf Basis von komplexiertem TiCl₃ einer Behandlung der Präpolymerisation unterzogen wird, auf solche Weise, daß mindestens 50 Gew.-% Polymer bezogen auf das Gewicht an TiCl₃ eingebaut werden.
